# EUROPÄISCHE PATENTSCHRIFT

(11) **EP 1 083 017 B1**
(45) Veröffentlichungstag und Bekanntmachung des Hinweises auf die Patenterteilung: **21.04.2004**
(21) Anmeldenummer: 00203039.3
(22) Anmeldetag: 01.09.2000
(51) Int. Cl.: B23D 77/02

(54) **Rotierendes Zerspanungswerkzeug**
Rotary cutting tool
Outils coupant rotatif

(30) Priorität: 09.09.1999 AT 61299
(43) Veröffentlichungstag der Anmeldung: 14.03.2001
(73) Patentinhaber: CERATIZIT Austria Gesellschaft m.b.H., 6600 Reutte /Tirol (AT)
(72) Erfinder: Koch, Wolfgang, 6600 Reutte/Tirol (AT); Ertl, Christian, 6600 Breitenwang (AT)
(74) Vertreter: Lohnert, Wolfgang, Dr.

(56) Entgegenhaltungen:
- EP-A- 0 865 851
- WO-A-96/17706
- DE-A- 3 533 125

## Beschreibung

Die Erfindung betrifft ein rotierendes Zerspanungswerkzeug für die Hochgeschwindigkeitsbearbeitung mit mindestens einem auf einem Werkzeuggrundkörper oder einer Werkzeugkassette auswechselbar befestigten Schneideinsatz, wobei die Auflagefläche des Schneideinsatzes und die Aufnahmefläche des Werkzeuggrundkörpers bzw. der Werkzeugkassette im Schnitt senkrecht zur Rotationsachse R gesehen zumindest abschnittsweise jeweils etwa V-förmig ausgestaltet sind und ineinander greifen.

Rotierende Zerspanungswerkzeuge für die Hochgeschwindigkeitsbearbeitung wie Hochgeschwindigkeitsfräser oder Hochgeschwindigkeitsbohrer werden bei sehr hohen Drehzahlen von bis zu 80.000 Umdrehungen pro Minute und mehr eingesetzt. Durch diese hohen Drehzahlen treten am Werkzeug sehr große Fliehkräfte auf, die die Werkzeugteile auf das Äußerste beanspruchen. Aufgrund dieser großen Fliehkräfte ist es nicht mehr möglich - wie bei Werkzeugen für die konventionelle Zerspanung üblich - die auswechselbaren Schneideinsätze mit einer ebenen Auflagefläche nur kraftschlüssig über eine Klemmbefestigung oder über Schrauben mit dem Werkzeuggrundkörper oder einer Werkzeugkassette zu verbinden, da sonst die zulässige Beanspruchung der Befestigungsmittel überschritten wird.
Man ist daher bei Werkzeugen für die Hochgeschwindigkeitsbearbeitung bestrebt, zusätzlich zur kraftschlüssigen Verbindung zwischen auswechselbaren Schneideinsätzen und Werkzeuggrundkörper eine formschlüssige Verbindung zu schaffen, um über diese formschlüssige Verbindung den Großteil der Fliehkräfte aufzunehmen und die Beanspruchung der Befestigungsmittel herabzusetzen.

Bekannte formschlüssige Verbindungen sind beispielsweise
Nut- und Federverbindungen, bei denen die Auflagefäche des Schneideinsatzes eine rechteckige Feder aufweist, die in eine entsprechende Nut der Aufnahmefläche des Werkzeuggrundkörpers eingreift.
Eine derartige Konstruktion führt jedoch zu sehr hohen Beanspruchungen des Werkzeuggrundkörpers, vor allem im Bereich des Nutengrundes durch Kerbwirkung.

Die DE OS 35 33 125 beschreibt eine weitere Ausführung einer formschlüssigen Verbindung zwischen einer Wendeschneidplatte und dem Werkzeuggrundkörper. Nach dieser Vorveröffentlichung weist die Auflagefläche der Wendeschneidplatte und die Aufnahmefläche des Werkzeuggrundkörpers miteinander in Eingriff stehende Verzahnungen auf, deren Zähne parallel zur Rotationsachse verlaufen und einen bestimmten Flankenwinkel aufweisen.
Der Nachteil einer derartigen Ausführung liegt darin, dass durch die Vielzahl der Anlagekontakte eine Überbestimmung vorliegt, wodurch keine eindeutige Positonierung der Wendeschneidplatte im Werkzeuggrundkörper gewährleistet ist. Darüber hinaus ist diese Verzahnung im Verhältnis zur Wendeschneidplattengröße sehr klein, wodurch es zum Bruch einzelner Zähne kommen kann.

Weiters sind auch rotierende Werkzeuge für die Hochgeschwindigkeitszerspanung bekannt, bei denen der Werkzeuggrundkörper eine flache V-förmige Nut aufweist, in die eine entsprechend, V-förmig erhaben ausgestaltete Auflagefläche der Wendeschneidplatte eingreift. Dabei sind die Auflagefläche der Wendeschneidplatte, die Aufnahmefläche des Werkzeuggrundkörpers und die radiale Anlagefläche der Wendeschneidplatte am Werkzeuggrundkörper derart mit Spiel aufeinander abgestimmt, dass bei lagerichtiger Positionierung der Wendeschneidplatte ihre Auflagefläche passgenau satt an der Aufnahmefläche des Werkzeuggrundkörpers aufliegt.

Nachteilig bei einer derartigen Ausführung ist, dass die Wendeschneidplatten beim Einsatz des Werkzeuges aufgrund der hohen Flieh- und Schnittkräfte unkontrolliert seitlich verkippen können.

Die Aufgabe der vorliegenden Erfindung ist es daher, ein rotierendes Zerspanungswerkzeug für die Hochgeschwindigkeitsbearbeitung zu schaffen, bei welchem die Schneideinsätze mit dem Werkzeuggrundkörper auch unter Einsatzbedingungen eine lagestabile formschlüssige Verbindung aufweisen, ohne dass mechanische Überbeanspruchungen an den Schneideinsätzen, Befestigungselementen oder an Teilen des Werkzeuggrundkörpers auftreten.

Erfindungsgemäß wird dies dadurch erreicht, dass der Scheitelbereich sowie zumindest einer der Endbereiche der V-förmigen Auflagefläche und der V-förmigen Aufnahmefläche gegeneinander freigestellt sind und dass zumindest eine im wesentlichen parallel zur Rotationsachse R angeordnete Anlagefläche am Werkzeuggrundkörper bzw. an der Werkzeugkassette zur radialen Abstützung des Schneideinsatzes derart angeordnet ist, dass der Schneideinsatz bei seiner Befestigung so verkippt wird, dass die Auflagefläche des Schneideinsatzes und die Aufnahmefläche des Werkzeuggrundkörpers bzw. der Werkzeugkassette in einem Radialschnitt nur an zwei Punkten in gegenseitigem Kontakt stehen, und zwar bei den von der Rotationsachse R weiter entfernten Schenkeln des V im scheitelfernen Bereich, und bei den näher an der Rotationsachse R liegenden Schenkeln des V, im scheitelnahen Bereich.
Um diese gezielte Verkippung zu erreichen, müssen Auflagefläche, Aufnahmefläche und radiale Anlagefläche derart aufeinander abgestimmt sein, dass bei fiktiver Annahme einer passgenauen satten Auflage des Schneideinsatzes am Werkzeuggrundkörper die Anlagefläche zur radialen Abstützung des Schneideinsatzes innerhalb des Schneideinsatzes liegen würde. Durch diese konstruktive Maßnahme und die gegenseitigen Freistellungen im Scheitelbereich und Endbereich der V-förmigen Auflagefläche und Aufnahmefläche wird erreicht, dass beim Befestigen des Schneideinsatzes am Werkzeuggrundkörper, die radiale Anlagefläche den Schneideinsatz gegenüber dem Werkzeuggrundkörper verkippt und es zur gewünschten Zwei-Punkt-Auflage kommt. Als Maß für die Freistellungen hat sich dabei je nach Größe des Schneideinsatzes, ein Bereich zwischen 0,1 mm und 0,5 mm bewährt. Durch diesen Verkippungseffekt wird der Schneideinsatz zwischen radialer Anlagefläche und V-förmiger Aufnahmefläche des Werkzeuggrundkörpers verkeilt, so dass im Betrieb des Werkzeuges unter regulären Betriebsbedingungen ein weiteres, unkontrolliertes Verkippen des Schneideinsatzes weitgehend verhindert wird.

Die radiale Anlagefläche ist dabei so zu konstruieren, dass das fiktive Maß mit dem die Anlagefläche bei einer fiktiven, passgenauen satten Auflage von Schneideinsatz und Werkzeuggrundkörper innerhalb des Schneideinsatzes liegen würde, im Bereich von etwa 1 bis 10 %, vorteilhafterweise von 1,5 bis 3 % des Inkreismaßes des jeweils verwendeten Schneideinsatzes liegt.

In einer besonders vorteilhaften Ausführungsform der Erfindung ist die V-förmige Auflagefläche des Schneideinsatzes als Nut und die V-förmige Aufnahmefläche des Werkzeuggrundkörpers bzw. der Werkzeugkassette als Erhebung ausgestaltet. Dadurch wird erreicht, dass eine unerwünschte weitere Verkippung des Schneideinsatzes gegenüber dem Werkzeuggrundkörper aufgrund der bei der Zerspanung auftretenden Fliehkräfte vollständig vermieden wird.
Darüberhinaus wird durch diese konstruktive Maßnahme erreicht, dass der Werkzeuggrundkörper an der Stelle der stärksten Belastung durch den Schnittdruck einen vergrößerten Querschnitt aufweist.

In einer weiteren vorteilhaften Ausgestaltung der Erfindung liegen die Öffnungswinkel der V-förmigen Flächen des Schneideinsatzes und des Werkzeuggrundkörpers bzw. der Werkzeugkassette im Bereich zwischen 90° und 150°.
Dieser Bereich des Öffnungswinkels gewährleistet, dass einerseits die Tiefe der V-förmigen Nut im Schneideinsatz oder im Werkzeuggrundkörper bzw. der Werkzeugkassette unter Berücksichtigung der üblichen Schneideinsatzgrößen nicht zu groß wird und damit die Bruchanfälligkeit der Schneideinsätze bzw. des Werkzeuggrundkörpers möglichst herabgesetzt ist und andererseits doch noch genügend Eingriff gegeben ist, um eine ausreichende Abstützung des Schneideinsatzes am Werkzeuggrundkörper bzw. der Werkzeugkassette gegenüber den auftretenden Fliehkräften zu gewährleisten.
Ist die V-förmige Auflagefläche des Schneideinsatzes als Nut ausgestaltet, soll die Tiefe der Nut in der Regel 1/3 der Gesamtstärke des Schneideinsatzes nicht überschreiten, um eine Bruchgefährdung des Schneideinsatzes beim Spannen auszuschließen.
In Ausnahmefällen, insbesondere bei kleinen Schneideinsätzen kann die Tiefe der Nut bis an die Hälfte der Gesamtstärke des Schneideinsatzes heranreichen.

In einer weiteren, vorteilhaften Ausgestaltung des erfindungsgemäßen Zerspanungswerkzeuges ist der Scheitelbereich der V-förmigen Flächen durch eine Gerade abgestumpft, wobei die gegenseitige Freistellung idealerweise im Bereich von 0,1 bis 0,5 mm liegt.

Weiters ist es von Vorteil für das erfindungsgemäße Zerspanungswerkzeug, wenn der Schneideinsatz seitlich anschließend an die V-förmige Auflagefläche Stützfasen aufweist. Dadurch wird erreicht, dass der Schneideinsatz in Extremfällen bei einem Ausbruch der Schneidkante und einer damit verbundenen, enormen Steigerung des Schnittdrucks nur soweit weiterverkippen kann, bis die unterhalb der aktiven Schneidkante angeordnete Stützfase auf der Aufnahmefläche des Grundkörpers aufliegt. Damit kann eine Beschädigung des Grundkörpers weitgehend vermieden werden, zumindest dann, wenn der Schneideinsatz nicht vollständig zerstört wird.

Auch für die Freistellung der Stützfasen hat sich in der Praxis in Abhängigkeit von der Größe des Schneideinsatzes ein Maß im Bereich zwischen 0,1 und 0,5 mm bewährt.

Als besonders vorteilhaft hat es sich herausgestellt, wenn der Schneideinsatz ein Mittelloch aufweist und er durch eine in das Mittelloch eingreifende Klemmschraube am Werkzeuggrundkörper bzw. an der Werkzeugkassette befestigt ist. Auf diese Art und Weise wird eine einfache und sichere Verbindung der Werkzeugteile erreicht.

Im folgenden wird die Erfindung an Hand von Zeichnungen näher erläutert.

Es zeigen:
- Figur 1: Ausschnitt eines erfindungsgemäßen Fräswerkzeuges mit Plattensitz und Schneideinsatz in Explosionsdarstellung
- Figur 2: Prinzipdarstellung der Verhältnisse am Plattensitz bei fiktiver, passgenauer, satter Auflage des Schneideinsatzes
- Figur 3: Prinzipdarstellung der Verhältnisse am Plattensitz bei effektiver, verkippter Auflage des Schneideinsatzes

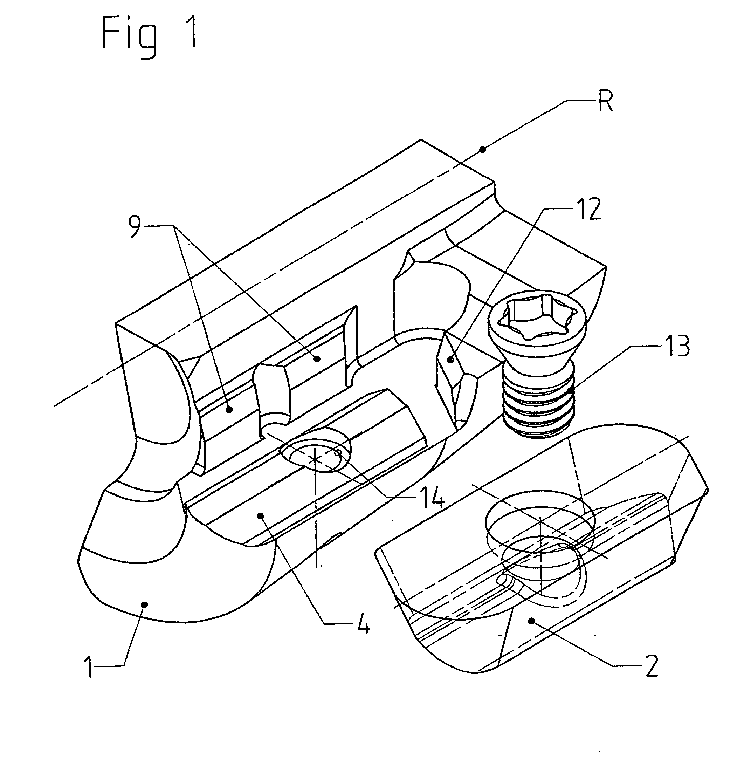

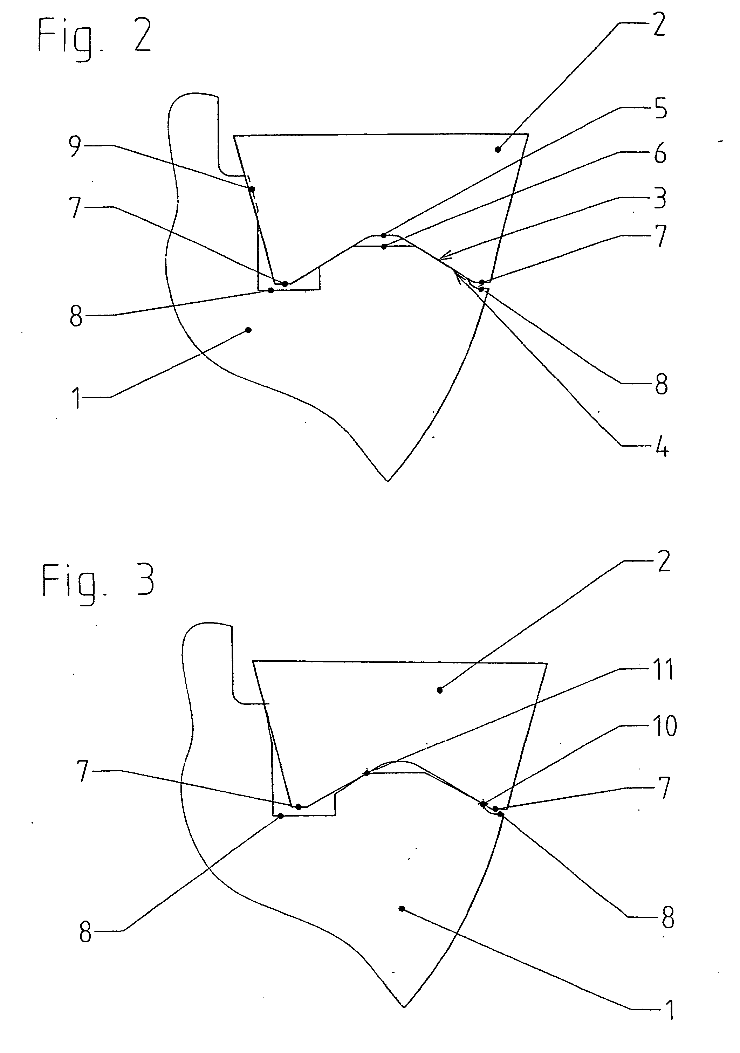

Der Ausschnitt eines erfindungsgemäßen Fräswerkzeuges für die Hochgeschwindigkeitsbearbeitung nach Figur 1 zeigt den Plattensitz am Werkzeuggrundkörper -1- sowie die zugehörige Wendeschneidplatte -2-. Die Aufnahmefläche -4- für den Schneideinsatz -2- ist V-förmig erhaben ausgestaltet, wobei der Scheitelbereich -6- durch eine ebene Fläche abgestumpft ist. Zur radialen Abstützung der Wendeschneidplatte -2- im wesentlichen parallel zur Rotationsachse R des Fräswerkzeuges sind zwei Anlageflächen -9- vorgesehen. Die axiale Positionierung der Wendeschneidplatte -2- erfolgt durch eine Anlagefläche -12-, an der die Stirnseite der Wendeschneidplatte -2- anliegt. In der Mitte der V-förmigen Aufnahmefläche -4- ist eine Gewindebohrung -14- vorgesehen, die zur Befestigung der Wendeschneidplatte -2- durch die Klemmschraube -13- mit dem Werkzeuggrundkörper -1- dient.
Die Auflagefläche -3- der Wendeschneidplatte -2- ist in übereinstimmender Weise wie die V-förmig erhabene Aufnahmefläche -4- des Werkzeuggrundkörpers -1- als V-förmige Nut ausgestaltet. Der Scheitelbereich -5- der V-förmigen Nut ist durch eine ebene Fläche abgestumpft. Anschließend an die V-förmige Auflagefläche -3- weist die Wendeschneidplatte -2- beidseitig angeordnete Stützfasen -7- auf.
Die radialen Anlageflächen -9- des Plattensitzes sind derart dimensioniert, dass diese bei einer fiktiven, passgenauen Auflage der Auflagefläche -3- der Wendeschneidplatte -2- auf der Aufnahmefläche -4- des Werkzeuggrundkörpers -1-innerhalb der Wendeschneidplatte -2- liegen würden.
Dies ist durch die Prinzipzeichnung gemäß Figur 2 dargestellt.
Gleichzeitig sind in dieser Figur die erfindungsgemäß erforderlichen Freistellungen der Geraden im Scheitelbereich -5- der V-förmigen Auflagefläche -3- gegenüber der Geraden im Scheitelbereich -6- der V-förmigen Aufnahmefläche -4- sowie der Stützfasen -7- gegenüber den entsprechenden Gegenflächen -8- am Werkzeuggrundkörper -1- dargestellt.
In der Praxis kommt es durch die erfindungsgemäße Ausgestaltung beim Festschrauben der Wendeschneidplatte -2- am Werkzeuggrundkörper -1- durch die radialen Anlageflächen -9- zu einer Verkippung der Wendeschneidplatte -2- derart, dass sich die V-förmige Auflagefläche -3- der Wendeschneidplatte -2- sowie die V-förmige Aufnahmefläche -4- des Werkzeuggrundkörpers nur mehr an zwei Punkten -10-, -11- berühren.
Ein Punkt -11- liegt bei den Schenkeln des V die näher an der Rotationsachse R des Fräswerkzeuges angeordnet sind, im scheitelnahen Bereich, während der zweite Punkt -10- bei den Schenkeln des V die weiter von der Rotationsachse R entfernt angeordnet sind, im scheitelfernen Bereich liegt.
Diese in der Praxis auftretenden Verhältnisse am Plattensitz sind in der Figur 3 dargestellt.

## Patentansprüche

1. Rotierendes Zerspanungswerkzeug für die Hochgeschwindigkeitsbearbeitung mit mindestens einem auf einem Werkzeuggrundkörper (1) oder einer Werkzeugkassette auswechselbar befestigten Schneideinsatz (2), wobei die Auflagefläche (3) des Schneideinsatzes (2) und die Aufnahmefläche (4) des Werkzeuggrundkörpers bzw. der Werkzeugkassette (1) im Schnitt senkrecht zur Rotationsachse R gesehen zumindest abschnittsweise jeweils etwa V-förmig ausgestaltet sind und ineinandergreifen,
**dadurch gekennzeichnet,**
**dass** der Scheitelbereich (5,6) sowie zumindest einer der Endbereiche (7,8) der V-förmigen Auflagefläche (3) und der V-förmigen Aufnahmefläche (4) gegeneinander freigestellt sind und dass zumindest eine im wesentlichen parallel zur Rotationsachse R angeordnete Anlagefläche (9) am Werkzeuggrundkörper (1) bzw. an der Werkzeugkassette zur radialen Abstützung des Schneideinsatzes (2) derart angeordnet ist, dass der Schneideinsatz (2) bei seiner Befestigung so verkippt wird, dass die Auflagefläche (3) des Schneideinsatzes (2) und die Aufnahmefläche (4) des Werkzeuggrundkörpers (1) bzw. der Werkzeugkassette in einem Radialschnitt nur an zwei Punkten (10,11) in gegenseitigem Kontakt stehen, und zwar bei den von der Rotationsachse R weiter entfernten Schenkeln des V im scheitelfemen Bereich, und bei den näher an der Rotationsachse R liegenden Schenkeln des V, im scheitelnahen Bereich.

2. Rotierendes Zerspanungswerkzeug für die Hochgeschwindigkeitsbearbeitung nach Anspruch 1, **dadurch gekennzeichnet, dass** die V-förmige Auflagefläche (3) des Schneideinsatzes (2) als Nut und die V-förmige Aufnahmefläche (4) des Werkzeuggrundkörpers (1) bzw. der Werkzeugkassette als Erhebung ausgestaltet sind.

3. Rotierendes Zerspanungswerkzeug für die Hochgeschwindigkeitsbearbeitung nach Anspruch 1 oder 2, **dadurch gekennzeichnet, dass** der Öffnungswinkel der V-förmigen Flächen des Schneideinsatzes (2) und des Werkzeuggrundkörpers (1 ) im Bereich zwischen 90° und 150° liegt.

4. Rotierendes Zerspanungswerkzeug für die Hochgeschwindigkeitsbearbeitung nach einem der Ansprüche 1 bis 3, **dadurch gekennzeichnet, dass** der Scheitelbereich (5,6) der V-förmigen Flächen (3,4) durch eine Gerade abgestumpft ist und die gegenseitige Freistellung im Bereich zwischen 0,1 und 0,5 mm liegt.

5. Rotierendes Zerspanungswerkzeug für die Hochgeschwindigkeitsbearbeitung nach einem der Ansprüche 1 bis 4, **dadurch gekennzeichnet, dass** der Schneideinsatz (2) seitlich anschließend an die V-förmigen Auflagefläche (3) Stützfasen (7) aufweist.

6. Rotierendes Zerspanungswerkzeug für die Hochgeschwindigkeitsbearbeitung nach einem der Ansprüche 1 bis 5, **dadurch gekennzeichnet, dass** der Schneideinsatz (2) ein Mittelloch aufweist und durch eine in das Mittelloch eingreifende Klemmschraube (13) am Werkzeuggrundkörper (1) bzw. an der Werkzeugkassette befestigt ist.

## Claims

1. A rotary cutting tool for high-speed machining, having at least one cutting insert (2) which is exchangeably mounted on a tool base body (1) or a tool cartridge, the supporting face (3) of the cutting insert (2) and the receiving face (4) of the tool base body or the tool cartridge, (1) each having an approximately V-shaped configuration, at least in parts, as seen in section perpendicular to the axis of rotation R and being in engagement with one another,
**characterised in that**
the vertex region (5, 6) and at least one of the end regions (7, 8) of the V-shaped supporting face (3) and the V-shaped receiving face (4) are clear of one another and **in that**, for the purpose of supporting the cutting insert (2) radially, at least one contact face (9) arranged substantially parallel to the axis of rotation R is arranged on the tool base body (1) or the tool cartridge in such a way that the cutting insert (2) is tilted when mounted so that the supporting face (3) of the cutting insert (2) and the receiving face (4) of the tool base body (1) or the tool cartridge are in mutual contact at only two points (10, 11) as seen in radial section and, more precisely, where the limbs of the V are further removed from the axis of rotation R, in the region remote from the vertex and, where the limbs of the V are located nearer to the axis of rotation R, in the region near to the vertex.

2. A rotary cutting tool for high-speed machining according to Claim 1, **characterised in that** the V-shaped supporting face (3) of the cutting insert (2) is constructed as a groove and the V-shaped receiving face (4) of the tool base body (1) or the tool cartridge is constructed as a raised portion.

3. A rotary cutting tool for high-speed machining according to Claim 1 or 2, **characterised in that** the aperture angle of the V-shaped faces of the cutting insert (2) and the tool base body (1) is in the range between 90° and 150°.

4. A rotary cutting tool for high-speed machining according to one of Claims 1 to 3, **characterised in that** the vertex region (5, 6) of the V-shaped faces (3, 4) is truncated by a straight line and the mutual clearance is in the range between 0.1 and 0.5 mm.

5. A rotary cutting tool for high-speed machining according to one of Claims 1 to 4, **characterised in that** the cutting insert (2) has supporting chamfers (7) laterally adjoining the V-shaped supporting face (3).

6. A rotary cutting tool for high-speed machining according to one of Claims 1 to 5, **characterised in that** the cutting insert (2) has a central hole and is mounted on the tool base body (1) or the tool cartridge by a clamping screw (13) engaging in the central hole.

## Revendications

1. Outil coupant rotatif pour l'usinage à grande vitesse qui comporte au moins une plaquette de coupe (2) fixée de manière amovible sur un corps d'outil (1) ou une cassette porte-outil, dans lequel la surface d'appui (3) de la plaquette de coupe (2) et la surface de réception (4) du corps d'outil ou de la cassette porte-outil (1), vues en coupe perpendiculairement à l'axe de rotation R, sont réalisées approximativement en forme de V, au moins par sections, et s'engagent l'une dans l'autre, **caractérisé en ce que** les zones de sommet (5, 6) ainsi qu'au moins une des zones d'extrémité (7, 8) de la surface d'appui en V (3) et de la surface de réception en V (4) sont espacées l'une de l'autre et qu'au moins une surface de contact (9) essentiellement parallèle à l'axe de rotation R est agencée sur le corps d'outil (1) ou la cassette porte-outil, comme support radial de la plaquette de coupe (2), de façon telle que lors de sa fixation la plaquette de coupe (2) se trouve inclinée de sorte que la surface d'appui (3) de la plaquette de coupe (2) et la surface de réception (4) du corps d'outil (1) ou de la cassette porte-outil soient -vues en coupe radiale- en contact réciproque en deux points (10, 11) seulement, à savoir -pour les côtés du V plus éloignés de l'axe de rotation R-dans la zone loin du sommet, et -pour les côtés du V plus proches de l'axe de rotation R- dans la zone proche du sommet.

2. Outil coupant rotatif pour l'usinage à grande vitesse selon la revendication 1 , **caractérisé en ce que** la surface d'appui en V (3) de la plaquette de coupe (2) est réalisée sous la forme d'une gorge et la surface de réception en V (4) du corps d'outil (1) ou de la cassette porte-outil sous la forme d'une élévation.

3. Outil coupant rotatif pour l'usinage à grande vitesse selon la revendication 1 ou 2, **caractérisé en ce que** l'angle d'ouverture des surfaces en V de la plaquette de coupe (2) et du corps d'outil (1) se situe dans la plage entre 90° et 150°.

4. Outil coupant rotatif pour l'usinage à grande vitesse selon une quelconque des revendications 1 à 3, **caractérisé en ce que** la zone de sommet (5, 6) des surfaces en V (3, 4) est tronquée par une ligne droite et que l'espacement réciproque se situe dans la plage entre 0,1 et 0,5 mm.

5. Outil coupant rotatif pour l'usinage à grande vitesse selon une quelconque des revendications 1 à 4, **caractérisé en ce que** la plaquette de coupe (2) comporte, dans le prolongement latéral de la surface d'appui en V (3), des chanfreins de support (7).

6. Outil coupant rotatif pour l'usinage à grande vitesse selon une quelconque des revendications 1 à 5, **caractérisé en ce que** la plaquette de coupe (2) comporte un trou central et est fixée au corps d'outil (1) ou à la cassette porte-outil au moyen d'une vis de blocage (13) engagée dans le trou central.
